# EUROPEAN PATENT SPECIFICATION

(11) **EP 0 503 668 B1**
(45) Date of publication and mention of the grant of the patent: **17.01.1996**
(21) Application number: 92104409.5
(22) Date of filing: 13.03.1992
(51) Int. Cl.: C08G 77/38

(54) **Alkenyl groups containing organosilicum compounds, a process for their preparation and their use**
Alkenylgruppen aufweisende Organosiliciumverbindungen, Verfahren zu ihrer Herstellung und Verwendung dieser Organosiliciumverbindungen
Composés organosiliciés contenant des groupes alkényles, leur fabrication et leur utilisation

(30) Priority: 14.03.1991 DE 4108334
(43) Date of publication of application: 16.09.1992
(73) Proprietor: WACKER-CHEMIE GMBH, D-81737 München (DE)
(72) Inventor: Herzig, Christian, Dr., W-8221 Taching am See/FRG (DE)

(56) References cited:
- EP-A- 0 424 960
- CHEMICAL ABSTRACTS, vol. 105, no. 11, 15. September 1986, Columbus, Ohio, US; abstract no. 97545d, M.G. VORONKOF ET AL. 'HYDROSILYLATION OF 1-(ALLYLOXY)-3- (PROPARGYLOXY)-2-PROPANOL' Seite 644 ;

## Description

Gemäß US-A 4 609 574 (ausgegeben 2. September 1986, J. R. Keryk et al., Dow Corning Corporation) weisen in Organopolysiloxanzusammensetzungen Si-gebundene höhere Alkenylgruppen, wie z.B. 5-Hexenylgruppen, eine größere Reaktivität gegenüber Si-gebundenem Wasserstoff auf als Si-gebundene Vinylgruppen. Die höhere Alkenylgruppen enthaltenden Organopolysiloxane können durch Umsetzung von Si-gebundenen Wasserstoff aufweisendem Organopolysiloxan mit α,ω-Dien hergestellt werden, wobei aber immer Mehrfachaddition auftritt. Bevorzugt werden daher die höhere Alkenylgruppen enthaltenden Organopolysiloxane aus den entsprechenden Silanen durch Umsetzung von α,ω-Dien in großem Überschuß mit Silan mit Si-gebundenem Wasserstoff und anschließender Hydrolyse dieser Silane und Äquilibrierung dieser Silane mit Organopolysiloxanen gewonnen.

In E. Lukevits et al., Zhurnal Obshchei Khimii, Vol. 56, 140-143, 1986 (Chemical Abstracts, Vol. 105, 226720 h, 1986) ist die Hydrosilylierung von Alkenen und Alkinen mit Dimethyl(2-thienyl)silan beschrieben. Die Dreifachbindung weist dabei eine größere Reaktivität als die Doppelbindung auf.

In M.G. Voronkov, Irk. Inst. Org. Khim., 55(9), 2091-3 (Chemical Abstracts, Vol. 105, 97545d, 1986) wird die Reaktion von 1-Allyloxy-3-propargyloxy-2-propanol mit Trialkylsilanen beschrieben, wobei Ausbeuten bis zu 70 % erzielt werden.

In M. Licchelli, A. Greco, Tetrahedron Lett. 28 (1987) 3719-22 wird die Hydrosilylierung von 2-Methyl-l-buten-3-in mit Methylchlorsilanen beschrieben, wobei die Hydrosilylierung dieses konjugierten Alkenins sowohl zur Mono- als auch zur Diaddition der verwendeten Silane führt.

In M.G. Veliev, Azerb. Khim. Zh. 1987 (1) 60-4 (Chemical Abstracts, Vol. 110, 135304n) wird die Reaktion eines Silans mit einer organischen Verbindung, die sowohl eine Kohlenstoff-Kohlenstoff-Doppelbindung als auch eine Dreifachbindung aufweist, beschrieben, wobei diese organische Verbindung eine Epoxy- oder eine Cyanogruppe aufweist.

In der deutschen Anmeldung mit dem Aktenzeichen P 3935775.9 (angemeldet am 27. Oktober 1989, Wacker-Chemie GmbH) bzw. der entsprechenden US-Anmeldung mit der Seriennummer 07/594,791 (angemeldet am 9. Oktober 1990) werden Alkenylgruppen aufweisende Organosiliciumverbindungen beschrieben, bei denen die einzelnen Kohlenstoff-Kohlenstoff-Doppelbindungen innerhalb eines Molekülteils relativ nah beieinander liegen, was sich bei einer Reaktion mit Si-gebundenem Wasserstoff als inhibierend auswirken kann.

Es bestand die Aufgabe, Alkenylgruppen aufweisende Organosiliciumverbindungen bereitzustellen, die in einem einfachen Verfahren mit hoher Selektivität hergestellt werden können. Die Aufgabe wird durch die Erfindung gelöst.

Gegenstand der Erfindung sind Alkenylgruppen aufweisende organosiliciumverbindungen aus durchschnittlichen Einheiten der Formel${\text{A}}_{\text{a}} {\text{R}}_{\text{b}} \text{Si} {\left(\text{OR} {\text{}}^{\text{1}}\right)}_{\text{c}} \text{O} {\text{}}_{\frac{\text{4-} \left(\text{a+b+c}\right)}{\text{2}}}$
wobei
- R: gleich oder verschieden sein kann und einen einwertigen, gegebenenfalls halogenierten Kohlenwasserstoffrest mit 1 bis 18 Kohlenstoffatom(en) je Rest bedeutet,
- R¹: gleich oder verschieden sein kann und einen Alkylrest mit 1 bis 8 Kohlenstoffatom(en) je Rest, der durch ein oder mehrere Ethersauerstoffatom(e) substituiert sein kann, bedeutet,
- a: 0 oder 1, durchschnittlich 0,003 bis 1,0,
- b: 0, 1, 2 oder 3, durchschnittlich 0,0 bis 3,0,
- c: 0, 1, 2 oder 3, durchschnittlich 0,0 bis 3,0, und die Summe a+b+c ≤ 4, durchschnittlich 1,5 bis 4,0 ist,
mit der Maßgabe, daß mindestens ein Rest A je Molekül enthalten ist, und
- A: ein Rest der Formel 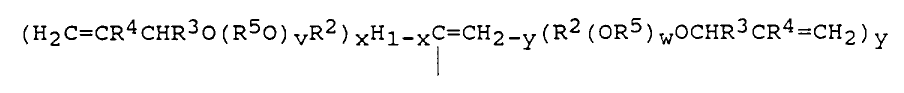
ist, wobei
- R: gleich oder verschieden sein kann und einen Alkylenrest mit 1 bis 4 Kohlenstoffatom(en) ist,
- R³: gleich oder verschieden sein kann und ein Wasserstoffatom oder einen Methylrest bedeutet,
- R⁴: gleich oder verschieden sein kann und ein Wasserstoffatom, Methyl- oder Ethylrest bedeutet,
- R⁵: gleich oder verschieden sein kann und einen Alkylenrest mit 1 bis 4 Kohlenstoffatome(en) bedeutet,
- v: 0 oder eine ganze Zahl und w 0 oder eine ganze Zahl bedeutet, mit der Maßgabe, daß im Rest A mindestens ein Spacer -(R⁵O)- vorhanden ist, sowie
- x: 0 oder 1 und y 0 oder 1 bedeutet, mit der Maßgabe, daß die Summe x+y 1 oder 2 ist.
Gegenstand der Erfindung ist weiterhin ein Verfahren zur Herstellung der Alkenylgruppen aufweisenden Organosiliciumverbindungen, dadurch gekennzeichnet, daß eine organische Verbindung (1) der Formel

(H₂C=CR⁴CHR³O(R⁵O)ᵥR)ₓH₁₋ₓC≡CH_{1-y}(R(OR⁵)_{W}OCHR³CR⁴=CH₂)_{y}

wobei x, y, v und z die jeweils oben angegebene Bedeutung haben, mit der Maßgabe, daß die Summe x+y 1 oder 2 ist und in Verbindung (1) mindestens ein Spacer -(R⁵O)- vorhanden ist, und R, R³, R⁴ und R⁵ jeweils gleich oder verschieden sein können und die oben angegebenen Bedeutungen haben, an eine Organosiliciumverbindung (2) mit mindestens einem Si-gebundenem Wasserstoffatom in ihrem Molekül in Gegenwart von die Anlagerung von Si-gebundenem Wasserstoff an aliphatische Mehrfachbindung förderndem Katalysator (3) angelagert wird.

Vorzugsweise sind die erfindungsmäßigen Organosiliciumverbindungen Silane oder Organopolysiloxane.

Die erfindungsgemäßen Organosiliciumverbindungen besitzen vorzugsweise ein durchschnittliches Molekulargewicht von 200 bis 100 000 g/Mol, bevorzugt 214 bis 10 000 g/Mol, und vorzugsweise eine Viskosität von 1 bis 1 000 000 mm·s⁻¹ bei 25°c, bevorzugt 1 bis 20 000 mm·s⁻¹ bei 25°c.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethyl-pentylrest, Nonylreste, wie der n-Nonylrest, Decylreste, wie der n-Decylrest, Dodecylreste, wie der n-Dodecylrest, Octadecylreste, wie der n-Octadecylrest; Cycloalkylreste, wie Cyclopentyl-, Cyclohexyl-, Cycloheptylreste und Methylcyclo-hexylreste; Arylreste, wie der Phenyl- Naphthyl- und Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Bei Rest R handelt es sich bevorzugt um Kohlenwasserstoffreste mit 1 bis 6 Kohlenstoffatom(en), besonders bevorzugt um den Methylrest.

Beispiele für Rest R¹ sind die für Rest R angegebenen Beispiele für Alkylreste mit 1 bis 8 Kohlenstoffatom(en) sowie der Methoxyethyl- und der Ethoxyethylrest.

Bei Rest R¹ handelt es sich bevorzugt um den Ethyl- und den Methylrest.

Beispiele für Alkylenreste R sind solche der Formel -(CH₂)-, -CH(CH₃)-, -C(CH₃)₂-, -C(CH₃)(C₂H₅)-, -(CH₂)₂- und -(CH₂)₄-.

Bevorzugt handelt es sich bei R um die -CH₂-Gruppe.

Bei Rest R³ handelt es sich bevorzugt um Wasserstoffatome.

Bei Rest R⁴ handelt es sich bevorzugt um Wasserstoffatome.

Beispiele für Rest R⁵ sind -(CH₂)₂-, -(CH₂)₃-, -(CH₂)₄-, -CH₂CH(CH₃)- und -(CH₂)₂CH(CH₃)-, wobei R⁵ bevorzugt die Bedeutung von -(CH₂)-Gruppe hat.

Bevorzugt beträgt die Summe aus x und y 1.

Bevorzugt handelt es sich bei v und w jeweils um ganze Zahlen von 1 bis 20, besonders bevorzugt von 1 bis 4.

Beispiele für Reste A sind solche der Formel 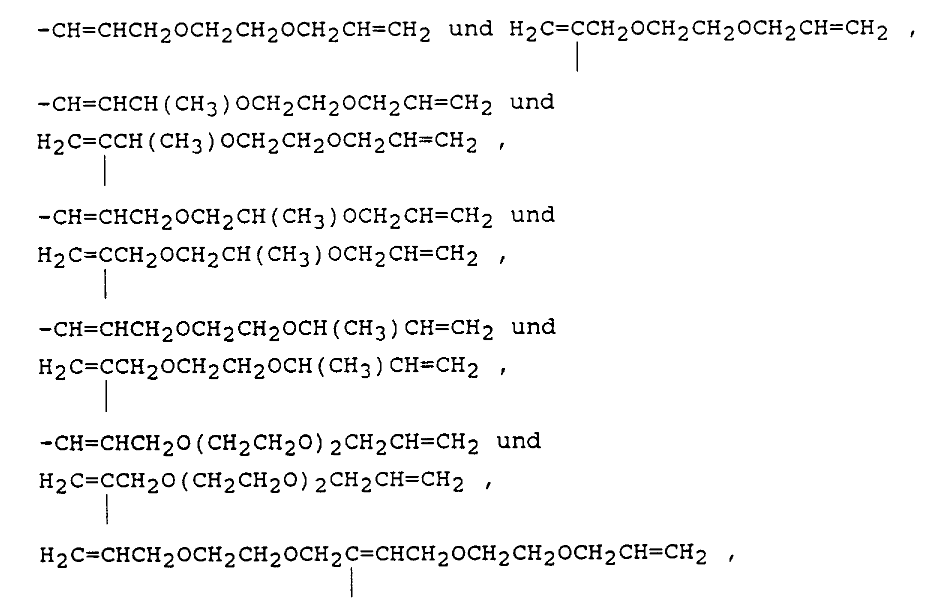 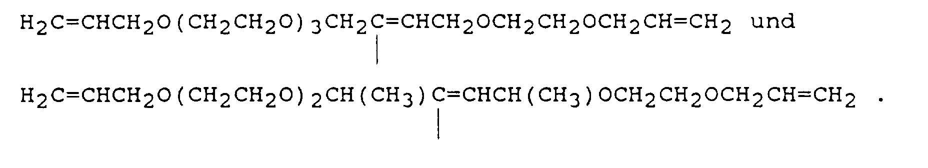 Bei dem Rest A handelt es sich bevorzugt um 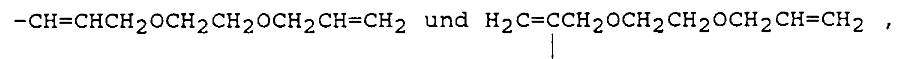 sowie um 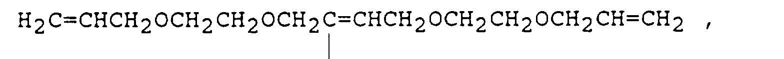 wobei das Isomerenpaar 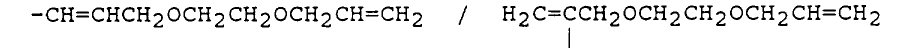 besonders bevorzugt ist.

Bevorzugt als Alkenylgruppen aufweisende Silane sind solche der Formel

AR_{d}Si(OR¹) _{3-d} (II)

wobei A, R und R¹ die oben dafür angegebene Bedeutung haben und d 0, 1, oder 2 ist.

Bevorzugt als Alkenylgruppen aufweisende Organopolysiloxane sind solche der Formel

A_{g}R_{3-g}siO(siR₂O)n(SiRAO)ₘSiR_{3-g}A_{g} (III)

wobei A und R die oben dafür angegebene Bedeutung haben,
- g: 0 oder 1,
- n: 0 oder eine ganze Zahl von 1 bis 1500 und
- m: 0 oder eine ganze Zahl von 1 bis 100 ist,
mit der Maßgabe, daß mindestens ein Rest A je Molekül enthalten ist.

Beispiele für organische Verbindungen (1), die bei dem erfindungsgemäßen Verfahren eingesetzt werden, sind solche der Formel

HC≡CCH₂OCH₂CH₂OCH₂CH=CH₂ ,

HC≡CCH(CH₃)OCH₂CH₂OCH₂CH=CH₂,

HC≡CCH₂OCH₂CH(CH₃)OCH₂CH=CH₂,

HC≡CCH₂OCH₂CH₂OCH(CH₃)CH=CH₂ ,

HC≡CCH₂O(CH₂CH₂O)₂CH₂CH=CH₂ ,

H₂C=CHCH₂OCH₂CH₂OCH₂C≡CCH₂OCH₂CH₂OCH₂CH=CH₂ ,

H₂C=CHCH₂O(CH₂CH₂O)₃CH₂C≡CCH₂OCH₂CH₂OCH₂CH=CH₂

und

H₂C=CHCH₂O(CH₂CH₂O)₂CH(CH₃)C≡CCH(CH₃)OCH₂CH₂OCH₂CH=CH₂.

Verfahren zur Herstellung der organischen Verbindungen (1) sind in EP-B 46 731 (veröffentlicht 3. Oktobter 1984, F. Lohse et al., Ciba-Geigy AG) und US-A 3 149 168 (ausgegeben 15. September 1964, S. I. Karlan et al., Thiokol Chemical Corp.) beschrieben.

Vorzugsweise werden als Organosiliciumverbindung (2) mit mindestens einem Si-gebundenem Wasserstoffatom je Molekül Silane mit einem Si-gebundenem Wasserstoffatom je Molekül oder
Organopolysiloxane mit mindestens einem Si-gebundenem Wasserstoffatom je Molekül aus Einheiten der Formel${\text{H}}_{\text{e}} {\text{R}}_{\text{f}} \text{SiO} {\text{}}_{\frac{\text{4-} \left(\text{e+f}\right)}{\text{2}}}$ wobei
- R: die oben dafür angegebene Bedeutung hat,
- e: 0 oder 1, durchschnittlich 0,003 bis 1,0,
- f: 0, 1, 2 oder 3, durchschnittlich 0,0 bis 3,0 und die Summe von e+f nicht größer als 3 ist,
eingesetzt.

Die Organopolysiloxane mit mindestens einem Si-gebundenen Wasserstoffatom enthalten vorzugsweise mindestens 0,04 Gew.-%, bevorzugt 0,1 bis 1,6 Gew.-%, Si-gebundenen Wasserstoff und ihre durchschnittliche Viskosität beträgt vorzugsweise 2 bis 20 000 mm·s⁻¹ bei 25°c, bevorzugt 2 bis 2000 mm·s-1 bei 25°c.

Bevorzugt werden als Silane mit einem Si-gebundenen Wasserstoffatom je Molekül solche der Formel

HR_{d}Si(OR¹)_{3-d} (V),

wobei R, R¹ und d die oben dafür angegebene Bedeutung haben, verwendet.

Bevorzugt werden als Organopolysiloxane mit mindestens einem Si-gebundenen Wasserstoffatom je Molekül solche der Formel

H_{g}R_{3-g}SiO(SiR₂O)ₙ(SiRHO)ₘSiR_{3-g}H_{g} (VI),

wobei R, g, n und m die oben dafür angegebene Bedeutung haben,
verwendet.

Ein bevorzugtes Beispiel für Silane der Formel (V) ist Triethoxysilan. Bevorzugte Beispiele für Organopolysiloxane der Formel (VI) sind Mischpolymerisate aus Dimethylhydrogen-siloxan- und Dimethylsiloxaneinheiten, Mischpolymerisate aus Dimethylhydrogensiloxan-, Dimethylsiloxan- und Methylhydrogensiloxaneinheiten, Mischpolymerisate aus Trimethyl-siloxan- und Methylhydrogensiloxaneinheiten und Mischpolymerisate aus Trimethylsiloxan-, Dimethylsiloxan- und Methylhydrogensiloxaneinheiten.

Verfahren zum Herstellen von Organopolysiloxanen mit mindestens einem Si-gebundenen Wasserstoffatom je Molekül, auch von solchen der bevorzugten Art, sind allgemein bekannt.

Organische Verbindung (1) wird bei dem erfindungsgemäßen Verfahren vorzugsweise in solchen Mengen eingesetzt, daß 1 bis 2 Mol, bevorzugt 1,05 bis 1,20 Mol, organische Verbindung (1) je Grammatom Si-gebundenem Wasserstoff in der Organosiliciumverbindung (2) vorliegt.

Als die Anlagerung von Si-gebundenem Wasserstoff an aliphatische Mehrfachbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxid, Aluminiumoxid oder Aktivkohle befinden kann, Verbindungen oder Komplexe von Platin, wie Platinhalogenide, z.B. PtCl₄, H₂Ptcl₆·6H₂O, Na₂PtCl₄·4H₂O, Platin-Olefin-Komplexe, PlatinAlkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆·6H₂O und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridin-platindichlorid, Dicyclopentadienplatindichlorid, Di-methylsulfoxidethylenplatin-(II)-dichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 200 Gew.-ppm (Gewichtsteilen je Million Gewichtsteilen), bevorzugt in Mengen von 1 bis 50 Gew.-ppm, jeweils berechnet als elementares Platin und bezogen auf das Gesamtgewicht von organischer Verbindung (1) und Organosiliciumverbindung (2) eingesetzt.

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 80°c bis 150°c, bevorzugt 100°c bis 150°c, besonders bevorzugt 120°c bis 130°c, durchgeführt.

Bei dem erfindungsgemäßen Verfahren können in bezug auf die Reaktionsteilnehmer inerte, organische Lösungsmittel mitverwendet werden, obwohl die Mitverwendung von in bezug auf die Reaktionsteilnehmer inertem, organischem Lösungsmittel nicht bevorzugt ist. Beispiele für in bezug auf die Reaktionsteilnehmer inerte, organische Lösungsmittel sind Toluol, Xylol, Octanisomere und Butylacetat.

Von den nach dem erfindungsgemäßen Verfahren hergestellten Alkenylgruppen enthaltenden Organosiliciumverbindungen wird vorzugsweise überschüssige organische Verbindung (1) sowie gegebenenfalls mitverwendetes, in bezug auf die Reaktionsteilnehmer inertes, organisches Lösungsmittel destillativ entfernt. Falls eine Abtrennung von überschüssiger organischer Verbindung (1) erwünscht wird, können unter Umständen, abhängig vom Molekulargewicht der organischen Verbindung (1), insbesondere bei großen Werten für v bzw. w, weitere Trennungsschritte, wie beispielsweise Extraktion mit Wasser oder Alkoholen, erforderlich sein.

Das erfindungsgemäße Verfahren hat den Vorteil, daß Alkenylgruppen aufweisende Organosiliciumverbindungen sowohl mit einer sehr hohen Selektivität als auch mit einem sehr hohen Umsatz hergestellt werden können.

Die Anlagerung von Organosiliciumverbindung (2) mit mindestens einem Si-gebundenen Wasserstoffatom je Molekül an organische Verbindung (1) erfolgt sowohl für x=0 und y=1 oder x=1 und y=0 selektiv an der endständigen Dreifachbindung und nicht an der endständigen Doppelbindung als auch für x=1 und y=1 selektiv an der mittelständigen Dreifachbindung und nicht an den endständigen Doppelbindungen. So lassen sich Alkenylgruppen enthaltende Organopolysiloxane direkt aus Organopolysiloxan mit Si-gebundenen Wasserstoffatomen und organischer Verbindung (1) herstellen, ohne daß es zu einer Vernetzung über die endständigen Doppelbindungen kommt. Weiterhin werden erfindungsgemäß Alkenylgruppen enthaltende Organosiliciumverbindungen erhalten, ohne daß eine Doppelbindungsisomerisierung bei der bzw. den endständigen Doppelbindung(en) von der Endposition in die Kette stattfindet. Sollte jedoch unter bestimmten Bedingungen, wie etwa unter Einfluß starker Basen, Doppelbindungsisomerisierung auftreten, so haben die erfindungsgemäßen Organosiliciumverbindungen den Vorteil, daß dabei aufgrund des Spacers keine Claisen-Umlagerung als thermische Folgereaktion möglich ist.

Die erfindungsgemäßen Alkenylgruppen aufweisenden Organosiliciumverbindungen haben den Vorteil, daß sie für Hydrosilylierungsreaktionen sehr gut geeignet sind, da sie aufgrund des Spacers zwischen den einzelnen Doppelbindungen keinen bzw. nur einen relativ geringen inhibierenden Effekt zeigen.

Als Organopolysiloxane (4), mit dem die nach Beendigung der 1. Stufe vorliegende, Alkenylgruppen aufweisende Organosiliciumverbindung gegebenenfalls äquilibriert wird, werden vorzugsweise solche ausgewählt aus der Gruppe bestehend aus linearen, endständige Triorganosiloxygruppen aufweisenden Organopolysiloxanen der Formel

R⁶ ₃SiO(SiR⁶ ₂O)ᵣSiR⁶ ₃ ,

wobei R⁶ gleich oder verschieden sein kann und eine oben für R angegebene Bedeutung hat und r 0 oder eine ganze Zahl im Wert von 1 bis 1500 ist,
linearen, endständige Hydroxylgruppen aufweisenden Organopolysiloxanen der Formel

HO(SiR⁷ ₂O)ₛH ,

wobei R⁷ gleich oder verschieden sein kann und eine oben für R angegebene Bedeutung hat und s eine ganze Zahl im Wert von 1 bis 1500 ist,
cyclischen Organopolysiloxanen der Formel

(R⁸ ₂SiO)ₜ ,

wobei R⁸ gleich oder verschieden sein kann und eine oben für R angegebene Bedeutung hat und t eine ganze Zahl von 3 bis 12 ist,
und Mischpolymerisaten aus Einheiten der Formel

R⁹ ₂SiO und R⁹SiO_{3/2} ,

wobei R⁹ gleich oder verschieden sein kann und eine oben für R angegebene Bedeutung hat,
eingesetzt.

Die Mengenverhältnisse der in der gegebenenfalls durchgeführten 2. Stufe des erfindungsgemäßen Verfahrens eingesetzten Organopolysiloxane werden lediglich durch den gewünschten Anteil der Alkenylgruppen in dem in der gegebenenfalls durchgeführten 2. Stufe des erfindungsgemäßen Verfahrens erzeugten Organopolysiloxane und durch die gewünschte mittlere Kettenlänge bestimmt.

Bei dem gegebenenfalls in der 2. Stufe des erfindungsgemäßen Verfahrens durchgeführten Äquilibrieren werden vorzugsweise basische Katalysatoren, welche die Äquilibrierung fördern, eingesetzt. Beispiele für solche Katalysatoren sind Alkalihydroxide, wie Natriumhydroxid und Kaliumhydroxid, Trime-thylbenzylammoniumhydroxid und Tetramethylammoniumhydroxid, wobei Alkalihydroxide bevorzugt sind.

Alkalihydroxide werden vorzugsweise in Mengen von 50 bis 10 000 Gew.-ppm (= Teile je Million), insbesondere 500 bis 2000 Gew.-ppm, jeweils bezogen auf das Gesamtgewicht der eingesetzten Organosiliciumverbindungen, verwendet. Die Verwendung saurer Äquilibrierungskatalysatoren ist zwar möglich, jedoch nicht bevorzugt.

Die gegebenenfalls in der 2. Stufe des erfindungsgemäßen Verfahrens durchgeführte Äquilibrierung wird vorzugsweise bei 80°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Äquilibrieren wird vorzugsweise in 5 bis 20 Gew.-%, bezogen auf das Gesamtgewicht der jeweils eingesetzten Organosiliciumverbindungen, in mit Wasser nichtmischbarem Lösungsmittel, wie Toluol, durchgeführt. Vor dem Aufarbeiten des bei dem Äquilibrieren erhaltenen Gemisches kann der Katalysator unwirksam gemacht werden.

Die verschiedenen Stufen des erfindungsgemäßen Verfahrens können in ein und demselben Reaktionsgefäß hintereinander oder in voneinander getrennten Reaktionsgefäßen durchgeführt werden. Vorzugsweise wird es in ein und demselben Reaktionsgefäß hintereinander durchgeführt. Das erfindungsgemäße Verfahren kann absatzweise, halbkontinuierlich oder vollkontinuierlich durchgeführt werden.

Des weiteren können die erfindungsgemäßen, Alkenylgruppen aufweisenden Organosiliciumverbindungen, sofern sie OR¹-Gruppen mit R¹ gleich obengenannter Bedeutung aufweisen, der Hydrolyse bzw. Kondensation unterworfen werden. Hydrolyse bzw. Kondensation von Organosiliciumverbindungen mit Organyloxygruppen sind bereits vielfach bekannt. Beispielsweise können die erfindungsgemäßen Organosiliciumverbindungen mit Hydroxylgruppen aufweisenden linearen oder cyclischen Organosiliciumverbindungen, wie zum Beispiel α,ω-Dihydroxydimethylpolysiloxan, in Anwesenheit von Katalysator, wie zum Beispiel Organozinnverbindungen, Titan- und Zirkonester, quaternären Stickstoffbasen, sowie Mineralsäuren, und gegebenenfalls in Anwesenheit von Lösungsmittel umgesetzt werden. Hydrolyse und Kondensation werden dabei vorzugsweise zwischen 23 und 150°c, besonders bevorzugt zwischen 60 und 120°C und einem Druck zwischen 900 und 1110 hPa durchgeführt.

Die erfindungsgemäßen, Alkenylgruppen aufweisenden Organopolysiloxane können, wie auch die Si-gebundene Vinylgruppen aufweisenden Organopolysiloxane mit Si-gebundenen Wasserstoff aufweisenden Organopolysiloxanen, in Gegenwart von Hydrosilylierungskatalysatoren vernetzt werden.

Beispielsweise können die erfindungsgemäßen Organosiliciumverbindungen in Zusammensetzungen, die
(A) Alkenylgruppen aufweisende Organosiliciumverbindung der Formel (I), bevorzugt der Formel (III),
(B) mindestens ein Si-gebundenes Wasserstoffatom aufweisendes Organopolysiloxan und
(C) die Anlagerung von Si-gebundenem Wasserstoff an aliphatische Mehrfachbindung förderndem Katalysator enthalten, verwendet werden.

Als Komponente (B) werden vorzugsweise Organopolysiloxane der Formel (IV), bevorzugt der Formel (VI) verwendet.

Als Komponente (C) werden vorzugsweise die oben genannten Katalysatoren (3) verwendet.

Darüber hinaus können die obengenannten Zusammensetzungen weitere Stoffe (D), wie beispielsweise die Anlagerung von Si-gebundenem Wasserstoff an aliphatische Mehrfachbindung bei Raumtemperatur verzögernde Mittel enthalten. Solche Inhibitoren sind z. B. in US-A 3 933 880 beschrieben. Beispiele hierfür sind acetylenisch ungesättigte Alkohole, wie 3-Methyl-1-butin-3-ol, 1-Ethinylcyclohexan-1-ol, 3,5-Dimethyl-1-hexin-3-ol, 3-Methyl-1-pentin-3-ol und dergleichen mehr.

Zusammensetzungen, welche die erfindungsgemäßen, Alkenylgruppen aufweisenden Siliciumverbindungen enthalten, eignen sich zur Herstellung von klebrige Stoffe abweisenden Überzüge, von klebfreien Decklacken, von kautschukartigen Beschichtungen oder Formkörpern und von Vergußmassen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt.

### Beispiel 1

I) 795 g 2-Propinoxyethanol (käuflich erhältlich unter der Bezeichnung Golpanol PME bei der BASF) werden mit 1200 g 50 Gew.-%iger NaOH, 705 g Allylchlorid und 21 g Trimethylbenzylammoniumchlorid für eine Dauer von 2 Stunden bei 42°C gerührt. Sobald sich die zunächst exotherme Reaktion beruhigt hat, hält man die Temperatur des Gemisches unter gutem Rühren mit Hilfe eines warmen Wasser-bads unter Rückfluß am Siedepunkt. Die Rückflußtempe-ratur erreicht ca. 65°c. Nach dem Abkühlen werden 1200 ml Wasser zugegeben und anschließend die untere Phase abgetrennt. Das so erhaltene Rohprodukt wird zweimal mit je 300 ml Wasser gewaschen und im Vakuum destilliert. Bei 50°C bis 100°C und 5 hPa (abs.) erhält man 940 g eines farblosen Destillats. Entsprechend dem ¹H-NMR-Spektrum hat es die durchschnittliche Zusammensetzung

HC≡CCH₂O(CH₂CH₂O)_{1,13}CH₂CH=CH₂

mit einem C≡C-Äquivalent von 145,7.

153 g Allylether (1,05 Mol-C≡C-), dessen Herstellung oben unter I beschrieben ist, werden mit 2 mg Platin in Form einer 1 Gew.-%igen Lösung von H₂PtCl₆ in Isopropanol vermischt, unter Stickstoff auf 120°C erwärmt und anschließend während 2 Stunden insgesamt 164 g Triethoxysilan (1,00 Mol) zugetropft. Nach einer Reaktionszeit von 4 bis 5 Stunden ergibt die alkalische Wasserstoffbestimmung einen Umsatz von über 99 % des Si-gebundenen Wasserstoffs im Triethoxysilan. Das so erhaltene Rohprodukt enthält weniger als 3 Gew.-% Allylether-Edukt. Laut ¹H-NMR-Spektrum ist das Verhältnis von 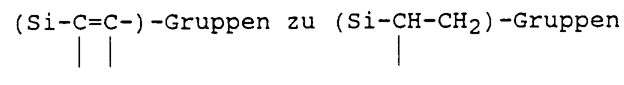 gleich 52:1. Durch Destillation im Vakuum erhält man von 110°c bis 160°c bei 5 hPa (abs.) 270 g einer farblosen Flüssigkeit mit einer Viskosität von 2,6 mm/s der durchschnittlichen Formel

(CH₃CH₂O)₃Si-CH=CHCH₂O(CH₂CH₂O)_{1,13}CH₂CH=CH₂ (A) ,

und 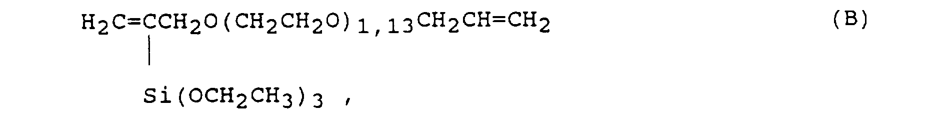 wobei das molare Verhältnis A:B gleich 43:57 beträgt.

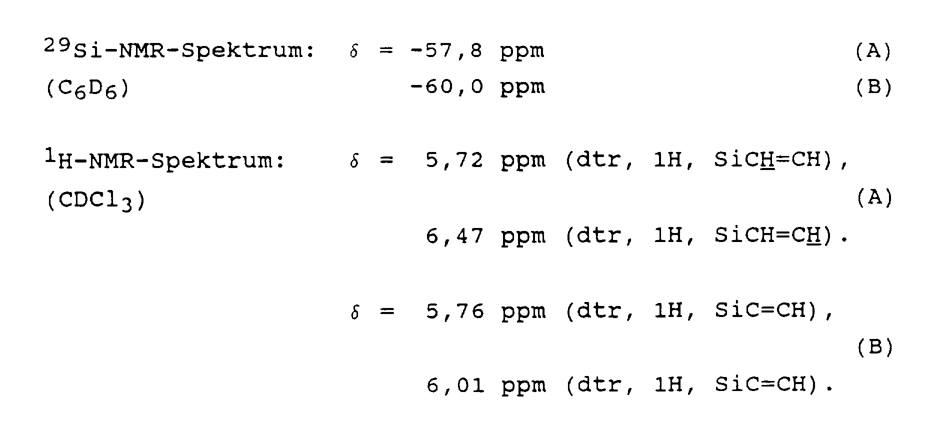

### Beispiel 2

50 g des Produkts aus Beispiel 1 werden bei einer Temperatur von 90°C mit 140 g einer 75 Gew.-%igen Lösung eines Phenylmethylsiloxans mit 3 Gew.-% Si-gebundenen Hydroxylgruppen, einem molaren Verhältnis von Si-gebundenen Phenylgruppen zu Si-gebundenen Methylgruppen von 37:63 und einer Viskosität von 90 mm/s in Xylol und 0,1 ml HClO₄ vermischt und gerührt. Nach 3 Stunden gibt man unter Rühren 1 g Natriumhydrogencarbonat zu, läßt die Mischung abkühlen und filtriert. Nach destillativem Entfernen von Xylol und entstandenem Ethanol (60°C / 5 hPa, abs.) werden 135 g eines doppelbindungshaltigen Harzes der Viskosität 4000 mm/s mit der Jodzahl 45 erhalten. Demnach enthalten 564 g Harz genau 1,00 Mol aliphatische Doppelbindungen.

### Beispiel 3

77 g Allylether (0,53 Mol -C≡C-), dessen Herstellung in Beispiel 1 unter I beschrieben ist, werden unter Stickstoff auf 120°c erwärmt und anschließend während 2 Stunden ein Gemisch aus 127 g eines α,ω-Dihydrogendimethylpolysiloxans mit 0,394 Gew.-% Si-gebundenem Wasserstoff und 2 mg Platin in Form einer 1 Gew.-%igen Lösung von Platintetrachlorid in 1-Octen zugetropft. Nach einer Reaktionszeit von 1,5 Stunden ergibt die alkalische Wasserstoffbestimmung einen Umsatz von mehr als 99 % des Si-gebundenen Wasserstoffs im α,ω-Dihydrogendimethylpolysiloxan. Nach Entfernen der flüchtigen Bestandteile bei 120°C und 10⁻³ hPa erhält man 170 g eines klaren gelblichen Öls mit einer Viskosität von 13,5 mm/s und einer Jodzahl von 112. Gemäß ¹H-NMR-Spektrum hat das so erhaltene Dimethylpolysiloxan je einen Si-gebundenen Rest der durchschnittlichen Formel

-CH=CH-CH₂O(CH₂CH₂O)_{1,13}CH₂CH=CH₂ (A)

bzw. 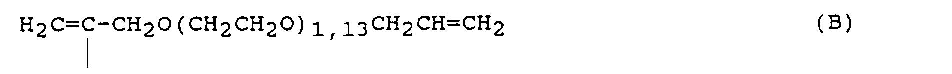 in den endständigen Einheiten und eine durchschnittliche Kettenlänge von 16, wobei das molare Verhältnis von A:B gleich 45:55 beträgt. Das ebenfalls aus dem ¹H-NMR-spektrum ermittelte Verhältnis von 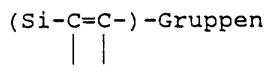 zu 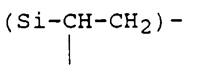 Gruppen von 300:1
zeigt deutlich die Bevorzugung der Dreifachbindung gegenüber der Doppelbindung.

Eine Verschiebung der allylisch endständigen Doppelbindung zum Ethersauerstoff wird nicht beobachtet.

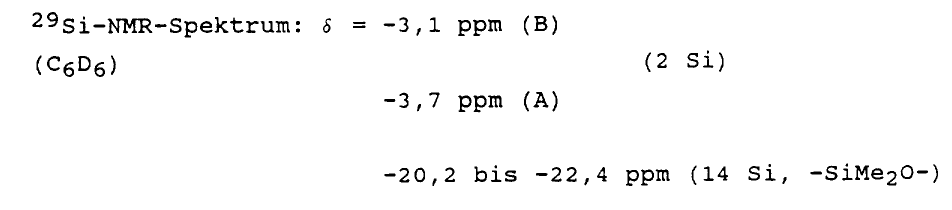

### Beispiel 4

20 g des Produkts von Beispiel 3 werden mit 300 g α,ω-Dihydroxypolydimethylsiloxan der Viskosität 20 000 mPa·s vermischt und nach Zugabe von 100 ppm PNCl₂ in Form einer 30 Gew.-%igen Lösung in 1,1,1-Trichlorethan bei 120°c äquilibriert. Die Viskositätskontrolle zeigt, daß das Siloxangemisch in weniger als 1 Stunde ausreagiert hat. Nach Filtration über Magnesiumoxid und Ausheizen bei 120°C und 2 hPa erhält man 290 g eines gelblichen Öls der Viskosität 800 mm/s. Die Jodzahl von 6,6 ergibt eine berechnete durchschnittliche Kettenlänge von 204 Si-Einheiten.

### Beispiel 5

120 g Allylether (0,82 Mol -C≡C-), dessen Herstellung in Beispiel 1 unter I beschrieben ist, werden mit 7 mg Platin in Form einer 1 Gew.-%igen Lösung von Platintetrachlorid in 1-Octen unter Stickstoff auf 120°C erwärmt. Anschließend wird innerhalb 3 Stunden ein Äquilibrat aus Dimethylsiloxan-, Methylhydrogensiloxan- und Dimethylhydrogensiloxaneinheiten mit einer Viskosität von 70 mm/s und 0,133 Gew.-% Si-gebundenem Wasserstoff zudosiert. Nach einer Reaktionszeit von 5 Stunden ergibt die alkalische Wasserstoffbestimmung einen Umsatz von über 99 % des Si-gebundenen Wasserstoffs des Äquilibrats. Nach Entfernen des überschüssigen Allyletheredukts bei 120°C und 10⁻³ hPa erhält man eine klare, gelbliche Flüssigkeit mit einer Viskosität von 210 mm/s mit einer Jodzahl von 51. Gemäß ¹H-NMR-Spektrum ist das Verhältnis der 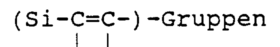 zu 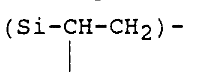 Gruppen größer als 200:1.

Das so erhaltene Organopolysiloxan hat durchschnittlich

-CH=CH-CH₂O(CH₂CH₂O)_{1,13}CH₂CH=CH₂ (A)

bzw. 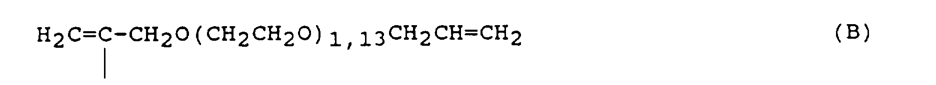 als terminale wie auch als laterale Gruppen und eine durchschnittliche Kettenlänge zwischen 70 und 80, wobei das Verhältnis von A:B gleich 39:61 beträgt.
¹H-NMR-Spektrum (CDCl₃)
terminale Gruppen:

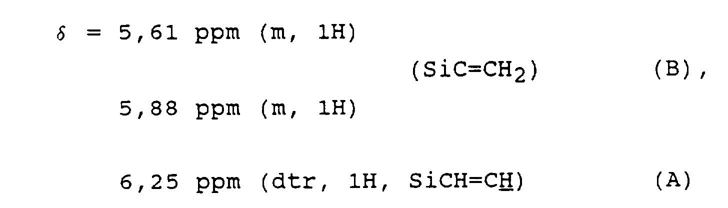

laterale Gruppen:

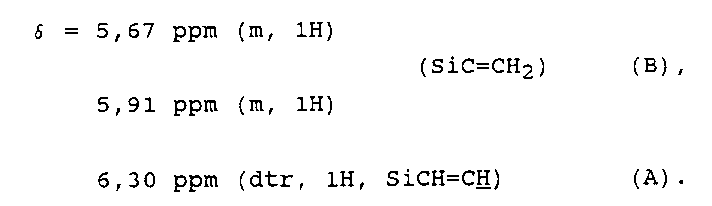

Eine Doppelbindungsisomerisierung von Allyloxy zu 1-Propenyloxy ist nicht erkennbar.

### Beispiel 6

II) Unter kräftigem Rühren vermischt man 1200 g 50 Gew.-%ige NaOH mit 690 g ethoxyliertem 2-Butin-1,4-diol (käuflich erhältlich unter der Bezeichnung Golpanol BEO bei der BASF) entsprechend 3,75 Mol -C≡C-, 820 g Allylchlorid und 21 g Trimethylbenzylammoniumchlorid, wobei die Reaktionswärme zu schwachem Sieden führt. Danach wird unter Rückfluß solange erhitzt, bis die Rückflußtemperatur ca. 65°C erreicht. Man kühlt ab und rührt 1200 ml Wasser ein, worauf sich das Gemisch in zwei klare Phasen trennen läßt. Die wäßrige Phase wird verworfen, das Rohprodukt noch zweimal mit je 300 ml Wasser gewaschen. Überschüssiges Allylchlorid wird ausdestilliert, der Allylether im Vakuum (11 hPa, abs.) zwischen 110°C und 160°C abgenommen. Man erhält 916 g eines farblosen Destillats mit der Jodzahl 286. Aus dem ¹H-NMR-Spektrum ist eine durchschnittliche Zusammensetzung von

CH₂=CHCH₂(OCH₂CH₂)_{1,02}OCH₂C≡CCH₂O(CH₂CH₂O) _{1,02}CH₂CH=CH₂

zu entnehmen, was einem C≡C-Äquivalent von 255,8 g entspricht.

In 139 g Diallylether, dessen Herstellung oben unter II beschrieben ist, werden 3,5 mg Platin in Form einer 1 Gew.-%igen Lösung von Platintetrachlorid in 1-Octen dispergiert und unter Stickstoff auf 130°C erwärmt. Innerhalb von 1,5 Stunden werden 227 g eines α,ω-Dihydrogenpolydimethylsiloxans mit einer Viskosität von 7 mm/s zugetropft, wobei die Temperatur der Reaktionsmischung auf einem Wert zwischen 125°C und 130°C gehalten wird. Nach 3 Stunden Reaktionszeit ergibt die alkalische Wasserstoffbestimmung einen Umsatz von über 99 % des Si-gebundenen Wasserstoffs des Organopolysiloxans. Nach Entfernen flüchtiger Bestandteile bei 120°C und 2 hPa erhält man 340 g eines klaren gelben Öls mit der Jodzahl 134 und einer Viskosität von 30 mm/s, wobei das Öl noch 2 Gew.-% des im Überschuß eingesetzten Diallylethers, bezogen auf das Gesamtgewicht des Öls, enthält. Gemäß 1H-NMR-Spektrum hat das so erhaltene Dimethylpolysiloxan je einen Si-gebundenen Rest der durchschnittlichen Formel 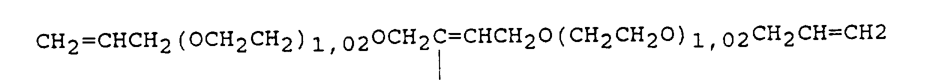 in den endständigen Einheiten und eine durchschnittliche Kettenlänge von 15. Dem ¹H-NMR-spektrum ist weiterhin zu entnehmen, daß das Verhältnis der 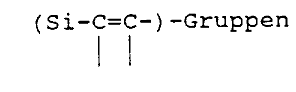 zu 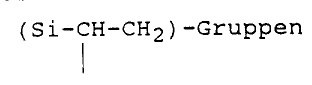 70:1 ist.
¹H-NMR-Spektrum: δ = 6,06 ppm 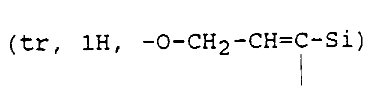 (CDCl₃)

### Beispiel 7

67 g des Produkts aus Beispiel 6 werden mit 670 g Octamethylcyclotetrasiloxan verschnitten. Man setzt 2,0 g frische 40 %ige KOH-Lösung in Methanol zu und äquilibriert 4 Stunden bei 150°C. Während des Abkühlens gibt man 1,0 g Eisessig zu und rührt daraufhin 0,5 Stunden mit 8 g schwach saurer Tonerde. Nach der Filtration entfernt man flüchtige Cyclen bei 100°C im Vakuum (2 hPa). Man erhält 600 g eines gelblichen Öls der Viskosität 1290 mm/s und der Jodzahl 7. Dies entspricht einer durchschnittlichen Kettenlänge von etwa 285 Si-Einheiten.

### Beispiel 8

Man vermischt 100 g des Produkts aus Beispiel 5 mit 300 g Octamethylcyclotetrasiloxan, setzt 1,0 g einer frischen 40 %igen KOH-Lösung in Methanol zu und erhitzt 5 Stunden auf 150°C. Der Katalysator wird während des Abkühlens mit 0,5 g Eisessig neutralisiert, das Gemisch nach Zusatz von 4 g schwach saurer Tonerde klar filtriert. Flüchtige Bestandteile entfernt man bei 100°c im Vakuum (2 hPa). Es verbleibt ein gelbliches Öl mit 1140 mm/s Viskosität. Bei einer Jodzahl von 12 trägt circa jedes 50. Si-Atom der Polydimethyl-siloxankette die in Beispiel 5 beschriebene Seitenkette A oder B.

### Beispiel 9

Man stellt eine Mischung her aus 20,0 g des Produkts aus Beispiel 4, 30 mg 2-Methyl-3-butin-2-ol, 200 mg einer Platinkatalysatorlösung (käuflich erhältlich unter der Bezeichnung "Lösung OL" bei der Wacker-Chemie GmbH, D-8000 München) und 400 mg eines Hydrolysats aus Methyldichlorsilan und Trimethylchlorsilan der Viskosität 20 mm/s. Mit Hilfe eines Glasstabs beschichtet man damit saugarmes Pergaminpapier, wobei die Schichtdicke 2 bis 3 µm beträgt, und läßt in einem auf 80°C vorgeheizten Umluftofen vernetzen. Nach 8 Sekunden ist die Beschichtung klebfrei und abriebfest. Die Topfzeit beträgt 20 Stunden.

Ohne Zusatz von 2-Methyl-3-butin-2-ol wird unter sonst gleichen Bedingungen eine klebfreie abriebfeste Beschichtung bereits nach 5 Sekunden erreicht. Die Topfzeit beträgt in diesem Fall nur 10 Minuten.

### Beispiel 10

III) 90 g eines Phenylmethylpolysiloxans mit 14 Gew.-% Si-gebundenen Methoxygruppen (unter der Handelsbezeichnung SY 231 bei der Wacker-Chemie GmbH erhältlich) werden mit 98 g 3-Mercaptopropyltrimethoxysilan, 3 g Eisessig und 10 ml Wasser 3 Stunden lang unter kräftigem Sieden äquilibriert und dann alle flüchtigen Bestandteile bei 80°C und 5 hPa destillativ entfernt. Es werden 162 g einer klaren farblosen Flüssigkeit mit einer Viskosität von 140 mm·s⁻¹ erhalten.

5,6 g des Produktes aus Beispiel 2 werden mit 3,3 g des oben unter III) beschriebenen 3-Mercaptopropylfunktionellen Phenylmethylharzes gemischt und mit 0,2 g eines Radikalinitiators (käuflich erhältlich unter der Bezeichnung Darocure 1173 bei Merck, Darmstadt) versetzt und soviel Xylol zugegeben, daß eine Verarbeitungsviskosität von etwa 500 mm/s erreicht wird. Eine Quecksilbermitteldrucklampe mit einer Leistung von 80 Watt/cm Leuchtlänge härtet eine dünn (5 µm) auf Papier gestrichene Beschichtung mit obigem Gemisch in weniger als einer Sekunde klebfrei und abriebfest.

## Claims

1. Organosilicon compounds containing alkenyl groups and comprising average units of the formula${\text{A}}_{\text{a}} {\text{R}}_{\text{b}} \text{Si} {\left(\text{OR} {\text{}}^{\text{1}}\right)}_{\text{c}} \text{O} {\text{}}_{\frac{\text{4-} \left(\text{a+b+c}\right)}{\text{2}}}$
in which
the R radicals may be identical or different and are monovalent, optionally halogenated hydrocarbon radicals having 1 to 18 carbon atom(s) per radical,
the R¹ radicals may be identical or different and are alkyl radicals having 1 to 8 carbon atom(s) per radical, which may be substituted by one or more ether oxygen atom(s),
a is 0 or 1, on average 0.003 to 1.0,
b is 0, 1, 2 or 3, on average 0.0 to 3.0,
c is 0, 1, 2 or 3, on average 0.0 to 3.0,
and the sum a+b+c ≤ 4, on average 1.5 to 4.0,
with the proviso that each molecule contains at least one radical A, and
A is a radical of the formula 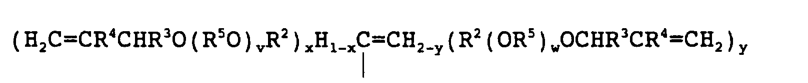 in which
R may be identical or different and is an alkylene radical having 1 to 4 carbon atom(s),
R³ may be identical or different and is a hydrogen atom or a methyl radical,
R⁴ may be identical or different and is a hydrogen atom or a methyl or ethyl radical,
R⁵ may be identical or different and is an alkylene radical having 1 to 4 carbon atom(s),
v is 0 or an integer and w is 0 or an integer, with the proviso that the radical A contains at least one spacer -(R⁵O)-, and
x is 0 or 1 and y is 0 or 1, with the proviso that the sum x+y is 1 or 2.

2. Organosilicon compounds containing alkenyl groups according to Claim 1, characterized in that they are silanes or organopolysiloxanes.

3. Organosilicon compounds containing alkenyl groups according to Claim 1 or 2, characterized in that they are silanes of the formula
AR_{d}Si(OR¹)_{3-d} (II)
in which
the R radicals are identical or different monovalent, optionally halogenated hydrocarbon radicals having 1 to 18 carbon atom(s) per radical,
the R¹ radicals are identical or different alkyl radicals having 1 to 8 carbon atom(s) per radical, which may be substituted by one or more ether oxygen atom(s),
d is 0, 1 or 2 and
A is a radical of the formula 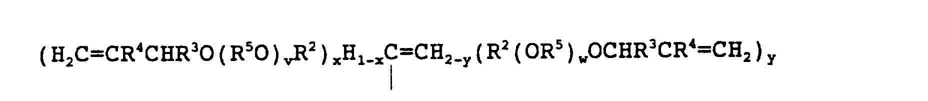 in which
R may be identical or different and is an alkylene radical having 1 to 4 carbon atom(s),
R³ may be identical or different and is a hydrogen atom or a methyl radical,
R⁴ may be identical or different and is a hydrogen atom or a methyl or ethyl radical,
R⁵ may be identical or different and is an alkylene radical having 1 to 4 carbon atom(s),
v is 0 or an integer and w is 0 or an integer, with the proviso that the radical A contains at least one spacer -(R⁵O)-, and
x is 0 or 1 and y is 0 or 1, with the proviso that the sum x+y is 1 or 2.

4. Organosilicon compounds containing alkenyl groups according to Claim 1 or 2, characterized in that they are organopolysiloxanes of the formula
A_{g}R_{3-g}SiO(SiR₂O)ₙ(SiRAO )ₘSiR_{3-g}A_{g} (III)
in which
the R radicals are identical or different monovalent, optionally halogenated hydrocarbon radicals having 1 to 18 carbon atom(s) per radical,
g is 0 or 1,
n is 0 or an integer from 1 to 1,500, and
m is 0 or an integer from 1 to 100,
with the proviso that each molecule contains at least one radical A,
A is a radical of the formula 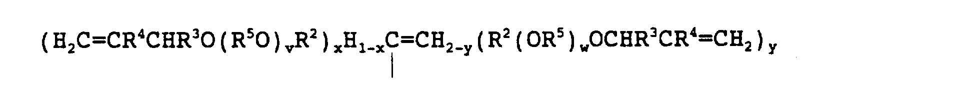
in which
R may be identical or different and is an alkylene radical having 1 to 4 carbon atom(s),
R³ may be identical or different and is a hydrogen atom or a methyl radical,
R⁴ may be identical or different and is a hydrogen atom or a methyl or ethyl radical,
R⁵ may be identical or different and is an alkylene radical having 1 to 4 carbon atom(s),
v is 0 or an integer and w is 0 or an integer, with the proviso that the radical A contains at least one spacer -(R⁵O)-, and
x is 0 or 1 and y is 0 or 1, with the proviso that the sum x+y is 1 or 2.

5. Organosilicon compounds containing alkenyl groups according to one or more of Claims 1 to 4, characterized in that the sum of x and y is 1.

6. Process for the preparation of the organosilicon compounds containing alkenyl groups according to one or more of Claims 1 to 5, characterized in that
in a 1st step,
an organic compound (1) of the formula
(H₂C=CR⁴CHR³O(R⁵O)ᵥR )ₓH₁₋ₓC=CH_{1-y}(R(OR⁵)_{w}OCHR³CR⁴=CH₂)_{y}
in which
R may be identical or different and is an alkylene radical having 1 to 4 carbon atom(s),
R³ may be identical or different and is a hydrogen atom or a methyl radical,
R⁴ may be identical or different and is a hydrogen atom or a methyl or ethyl radical,
R⁵ may be identical or different and is an alkylene radical having 1 to 4 carbon atom(s),
v is 0 or an integer and w is 0 or an integer, with the proviso that the radical A contains at least one spacer -(R⁵O)-, and
x is 0 or 1 and y is 0 or 1, with the proviso that the sum x+y is 1 or 2,
is subjected to an addition reaction with an organosilicon compound (2) containing at least one Si-bound hydrogen atom in its molecule,
in the presence of a catalyst (3) which promotes the addition reaction of Si-bound hydrogen with an aliphatic multiple bond, and, if necessary,
in a 2nd step,
the organosilicon compound containing alkenyl groups which is present after completion of the 1st step is equilibrated using an organopolysiloxane (4) selected from the group consisting of linear organopolysiloxanes containing terminal triorganosiloxy groups, linear organopolysiloxanes containing terminal hydroxyl groups, cyclic organopolysiloxanes and copolymers comprising diorganosiloxane and monoorganosiloxane units.

7. Process according to Claim 6, characterized in that the organosilicon compound (2) used containing at least one Si-bound hydrogen atom in its molecule is a silane (2a) of the formula
HR_{d}Si(OR¹)_{3-d} (V),
in which
the R radicals are identical or different monovalent, optionally halogenated hydrocarbon radicals having 1 to 18 carbon atom(s) per radical,
the R¹ radicals are identical or different alkyl radicals having 1 to 8 carbon atom(s) per radical, which may be substituted by one or more ether oxygen atom(s), and d is 0, 1 or 2.

8. Process according to Claim 6, characterized in that the organosilicon compound (2) containing at least one Si-bound hydrogen atom in its molecule is an organopolysiloxane (2b) of the formula
H_{g}R_{3-g}SiO(SiR₂O)ₙ(SiRHO)ₘSiR_{3-g}H_{g} (VI),
in which
the R radicals are identical or different monovalent, optionally halogenated hydrocarbon radicals having 1 to 18 carbon atom(s) per radical,
the R¹ radicals are identical or different alkyl radicals having 1 to 8 carbon atom(s) per radical, which may be substituted by one or more ether oxygen atom(s), and
g is 0 or 1,
n is 0 or an integer from 1 to 1,500, and
m is 0 or an integer from 1 to 100.

9. Compositions containing
(A) an organosilicon compound containing alkenyl groups according to one or more of Claims 1 to 5 and/or which can be produced according to one or more of Claims 6 to 8,
(B) an organopolysiloxane containing at least one Si-bound hydrogen atom, and
(C) a catalyst which promotes the addition reaction of Si-bound hydrogen with an aliphatic multiple bond.

10. Use of the compositions according to Claim 9 for the production of adhesive-repellent coatings.

## Patentansprüche

1. Alkenylgruppen aufweisende Organosiliciumverbindungen aus durchschnittlichen Einheiten der Formel${\text{A}}_{\text{a}} {\text{R}}_{\text{b}} \text{Si} {\left(\text{OR} {\text{}}^{\text{1}}\right)}_{\text{c}} \text{O} {\text{}}_{\frac{\text{4 -} \left(\text{a+b+c}\right)}{\text{2}}}$ wobei
R gleich oder verschieden sein kann und einen einwertigen, gegebenenfalls halogenierten Kohlenwasserstoffrest mit 1 bis 18 Kohlenstoffatom(en) je Rest bedeutet,
R¹ gleich oder verschieden sein kann und einen Alkylrest mit 1 bis 8 Kohlenstoffatom(en) je Rest, der durch ein oder mehrere Ethersauerstoffatom(e) substituiert sein kann, bedeutet,
a 0 oder 1, durchschnittlich 0,003 bis 1,0,
b 0, 1, 2 oder 3, durchschnittlich 0,0 bis 3,0,
c 0, 1, 2 oder 3, durchschnittlich 0,0 bis 3,0, und die Summe a+b+c ≤ 4, durchschnittlich 1,5 bis 4,0 ist,
mit der Maßgabe, daß mindestens ein Rest A je Molekül enthalten ist, und
A ein Rest der Formel 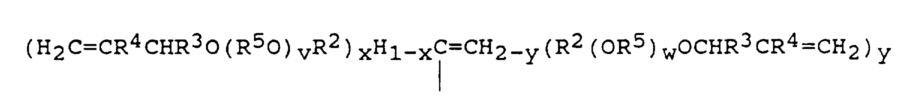 ist, wobei
R gleich oder verschieden sein kann und einen Alkylenrest mit 1 bis 4 Kohlenstoffatom(en) ist,
R³ gleich oder verschieden sein kann und ein Wasserstoffatom oder einen Methylrest bedeutet,
R⁴ gleich oder verschieden sein kann und ein Wasserstoffatom, Methyl- oder Ethylrest bedeutet,
R⁵ gleich oder verschieden sein kann und einen Alkylenrest mit 1 bis 4 Kohlenstoffatom(en) bedeutet,
v 0 oder eine ganze Zahl und w 0 oder eine ganze Zahl bedeutet, mit der Maßgabe, daß im Rest A mindestens ein Spacer -(R⁵O)- vorhanden ist, und
x 0 oder 1 und y 0 oder 1 bedeutet, mit der Maßgabe, daß die Summe x+y 1 oder 2 ist.

2. Alkenylgruppen aufweisende Organosiliciumverbindungen nach Anspruch 1, dadurch gekennzeichnet, daß es Silane oder Organopolysiloxane sind.

3. Alkenylgruppen aufweisende Organosiliciumverbindungen nach Anspruch 1 oder 2, dadurch gekennzeichnet, daß es Silane der Formel
AR_{d}Si(OR¹)_{3-d} (II)
sind, wobei
R gleich oder verschieden ist, einen einwertigen, gegebenenfalls halogenierten Kohlenwasserstoffrest mit 1 bis 18 Kohlenstoffatom(en) je Rest bedeutet,
R¹ gleich oder verschieden ist, einen Alkylrest mit 1 bis 8 Kohlenstoffatom(en) je Rest, der durch ein oder mehrere Ethersauerstoffatom(e) substituiert sein kann, bedeutet,
d 0, 1 oder 2 bedeutet und
A ein Rest der Formel 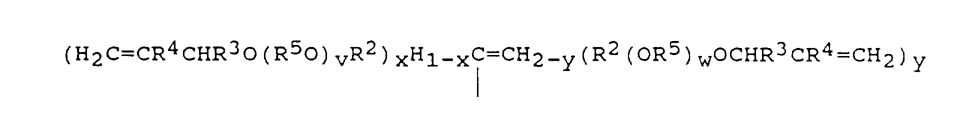
ist, wobei
R gleich oder verschieden sein kann und einen Alkylenrest mit 1 bis 4 Kohlenstoffatom(en) ist,
R³ gleich oder verschieden sein kann und ein Wasserstoffatom oder einen Methylrest bedeutet,
R⁴ gleich oder verschieden sein kann und ein Wasserstoffatom, Methyl- oder Ethylrest bedeutet,
R⁵ gleich oder verschieden sein kann und einen Alkylenrest mit 1 bis 4 Kohlenstoffatom(en) bedeutet,
v 0 oder eine ganze Zahl und w 0 oder eine ganze Zahl bedeutet, mit der Maßgabe, daß im Rest A mindestens ein Spacer -(R⁵O)- vorhanden ist, und
x 0 oder 1 und y 0 oder 1 bedeutet, mit der Maßgabe, daß die Summe x+y 1 oder 2 ist.

4. Alkenylgruppen aufweisende Organosiliciumverbindungen nach Anspruch 1 oder 2, dadurch gekennzeichnet, daß es Organopolysiloxane der Formel
A_{g}R_{3-g}SiO(SiR₂O)ₙ(SiRAO)ₘSiR_{3-g}A_{g} (III)
sind, wobei
R gleich oder verschieden ist, einen einwertigen, gegebenenfalls halogenierten Kohlenwasserstoffrest mit 1 bis 18 Kohlenstoffatom(en) je Rest bedeutet,
g 0 oder 1,
n 0 oder eine ganze Zahl von 1 bis 1500 und
m 0 oder eine ganze Zahl von 1 bis 100 bedeutet,mit des Maßgabe, daß mindestens ein Rest A je Molekül enthalten ist,
A ein Rest der Formel 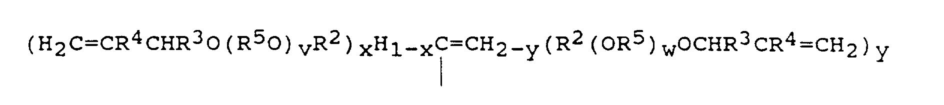
ist, wobei
R gleich oder verschieden sein kann und einen Alkylenrest mit 1 bis 4 Kohlenstoffatom(en) ist,
R³ gleich oder verschieden sein kann und ein Wasserstoffatom oder einen Methylrest bedeutet,
R⁴ gleich oder verschieden sein kann und ein Wasserstoffatom, Methyl- oder Ethylrest bedeutet,
R⁵ gleich oder verschieden sein kann und einen Alkylenrest mit 1 bis 4 Kohlenstoffatom(en) bedeutet,
v 0 oder eine ganze Zahl und w 0 oder eine ganze Zahl bedeutet, mit der Maßgabe, daß im Rest A mindestens ein Spacer -(R⁵O)- vorhanden ist, und
x 0 oder 1 und y 0 oder 1 bedeutet, mit der Maßgabe, daß die Summe x+y 1 oder 2 ist.

5. Alkenylgruppen aufweisende Organosiliciumverbindungen nach einem oder mehreren der Ansprüche 1 bis 4, dadurch gekennzeichnet, daß die Summe aus x und y gleich 1 ist.

6. Verfahren zur Herstellung der Alkenylgruppen aufweisenden Organosiliciumverbindungen nach einem oder mehreren der Ansprüche 1 bis 5, dadurch gekennzeichnet, daß
in einer 1. Stufe
eine organische Verbindung (1) der Formel
(H₂C=CR⁴CHR³O (R⁵O) ᵥR)ₓH₁₋ₓC≡CH_{1-y} (R (OR⁵) _{w}OCHR³CR⁴=CH₂) _{y},
wobei
R gleich oder verschieden sein kann und einen Alkylenrest mit 1 bis 4 Kohlenstoffatom(en) ist,
R³ gleich oder verschieden sein kann und ein Wasserstoffatom oder einen Methylrest bedeutet,
R⁴ gleich oder verschieden sein kann und ein Wasserstoffatom, Methyl- oder Ethylrest bedeutet,
R⁵ gleich oder verschieden sein kann und einen Alkylenrest mit 1 bis 4 Kohlenstoffatom(en) bedeutet,
v 0 oder eine ganze Zahl und w 0 oder eine ganze Zahl bedeutet, mit der Maßgabe, daß im Rest A mindestens ein Spacer -(R⁵O)- vorhanden ist, und
x 0 oder 1 und y 0 oder 1 bedeutet, mit der Maßgabe, daß die Summe x+y 1 oder 2 ist,
an eine Organosiliciumverbindung (2) mit mindestens einem Si-gebundenen Wasserstoffatom in ihrem Molekül
in Gegenwart von die Anlagerung von Si-gebundenem Wasserstoff an aliphatische Mehrfachbindung förderndem Katalysator (3) angelagert wird und gegebenenfalls
in einer 2. Stufe
die nach Beendigung der 1. Stufe vorliegende, Alkenylgruppen aufweisende Organosiliciumverbindung mit Organopolysiloxan (4) ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten äquilibriert wird.

7. Verfahren nach Anspruch 6, dadurch gekennzeichnet, daß als Organosiliciumverbindung (2) mit mindestens einem Si-gebundenen Wasserstoffatom in ihrem Molekül Silane (2a) der Formel
HR_{d}Si(OR¹)_{3-d} (V),
wobei
R gleich oder verschieden ist, einen einwertigen, gegebenenfalls halogenierten Kohlenwasserstoffrest mit 1 bis 18 Kohlenstoffatom(en) je Rest bedeutet,
R¹ gleich oder verschieden ist, einen Alkylrest mit 1 bis 8 Kohlenstoffatom(en) je Rest, der durch ein oder mehrere Ethersauerstoffatom(e) substituiert sein kann, bedeutet, und
d 0, 1 oder 2 ist,
verwendet werden.

8. Verfahren nach Anspruch 6, dadurch gekennzeichnet, daß als Organosiliciumverbindung (2) mit mindestens einem Si-gebundenen Wasserstoffatom in ihrem Molekül Organopolysiloxane (2b) der Formel
H_{g}R_{3-g}SiO(SiR₂O)ₙ(SiRHO)ₘSiR_{3-g}H_{g} (VI),
wobei
R gleich oder verschieden ist, einen einwertigen, gegebenenfalls halogenierten Kohlenwasserstoffrest mit 1 bis 18 Kohlenstoffatom(en) je Rest bedeutet,
R¹ gleich oder verschieden ist, einen Alkylrest mit 1 bis 8 Kohlenstoffatom(en) je Rest, der durch ein oder mehrere Ethersauerstoffatom(e) substituiert sein kann, bedeutet,
g 0 oder 1,
n 0 oder eine ganze Zahl von 1 bis 1500
m 0 oder eine ganze Zahl von 1 bis 100 bedeutet, verwendet werden.

9. Zusammensetzungen enthaltend
(A) Alkenylgruppen aufweisende Organosiliciumverbindung gemäß einem oder mehreren der Ansprüche 1 bis 5 bzw. herstellbar nach einem oder mehreren der Ansprüche 6 bis 8,
(B) mindestens ein Si-gebundenes Wasserstoffatom aufweisendes Organopolysiloxan und
(C) die Anlagerung von Si-gebundenem Wasserstoff an aliphatische Mehrfachbindung förderndem Katalysator.

10. Verwendung der Zusammensetzungen nach Anspruch 9 zur Herstellung von klebrige Stoffe abweisenden Überzügen.

## Revendications

1. Composés organosiliciés contenant des groupes alcényle, constitués d'unités moyennes de formule${\text{A}}_{\text{a}} {\text{R}}_{\text{b}} \text{Si} {\left(\text{OR} {\text{}}^{\text{1}}\right)}_{\text{c}} \text{O} {\text{}}_{\frac{\text{4-} \left(\text{a+b+c}\right)}{\text{2}}}$
dans lesquelles
R peut être identique ou différent et représente un radical hydrocarbure monovalent, facultativement halogéné, avec 1 à 18 atomes de carbone par radical,
R¹ peut être identique ou différent et représente un radical alcoyle avec 1 à 8 atomes de carbone par radical, qui peut être substitué par un ou plusieurs atomes d'oxygène de type éther,
a est 0 ou 1, en moyenne de 0,003 à 1,0,
b est 0, 1, 2 ou 3, en moyenne 0,0 à 3,0,
c est 0, 1, 2 ou 3, en moyenne 0,0 à 3,0, et la somme a+b+c ≤ 4, en moyenne est 1,5 à 4,0,
avec la condition qu'au moins un radical A est présent par molécule, et
A est un radical de formule 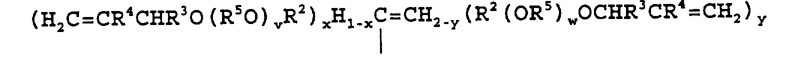 où
Rpeut être identique ou différent et est un radical alcoylène avec 1 à 4 atomes de carbone,
R³peut être identique ou différent et représente un atome d'hydrogène ou un radical méthyle,
R⁴peut être identique ou différent et représente un atome d'hydrogène ou un radical méthyle ou éthyle,
R⁵peut être identique ou différent et représente un radical alcoylène avec 1 à 4 atomes de carbone,
v représente 0 ou un nombre entier et w représente 0 ou un nombre entier, avec la condition que dans le radical A, il est prévu au moins un espaceur -(R⁵O)-, et
x représente 0 ou 1 et y, 0 ou 1, avec la condition que la somme x+y soit 1 ou 2.

2. Composés organosiliciés contenant des groupes alcényle suivant la revendication 1, caractérisés en ce qu'ils sont des silanes ou organopolysiloxanes.

3. Composés organosiliciés contenant des groupes alcényle suivant la revendication 1 ou 2, caractérisés en ce qu'ils sont des silanes de formule
AR_{d}Si(OR¹)_{3-d} (II)
où
R est identique ou différent et représente un radical hydrocarbure monovalent, facultativement halogéné, avec 1 à 18 atomes de carbone par radical,
R¹ est identique ou différent et représente un radical alcoyle avec 1 à 8 atomes de carbone par radical, qui peut être substitué par un ou plusieurs atomes d'oxygène de type éther,
d représente 0, 1 ou 2,
A est un radical de formule 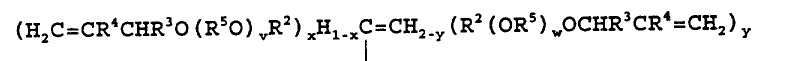
où
R peut être identique ou différent et est un radical alcoylène avec 1 à 4 atomes de carbone,
R³ peut être identique ou différent et représente un atome d'hydrogène ou un radical méthyle,
R⁴ peut être identique ou différent et représente un atome d'hydrogène ou un radical méthyle ou éthyle,
R⁵ peut être identique ou différent et représente un radical alcoylène avec 1 à 4 atomes de carbone,
v représente 0 ou un nombre entier et w représente 0 ou un nombre entier, avec la condition que dans le radical A, il est prévu au moins un espaceur -(R⁵O)-, et
x représente 0 ou 1 et y, 0 ou 1, avec la condition que la somme x+y soit 1 ou 2.

4. Composés organosiliciés contenant des groupes alcényle suivant la revendication 1 au 2, caractérisés en ce qu'ils sont des organopolysiloxanes de formule :
A_{g}R_{3-g}SiO(SiR₂O)ₙ(SiRAO)ₘSiR_{3-g}A_{g} (III)
où
R est identique ou différent et représente un radical hydrocarbure monovalent, facultativement halogéné, avec 1 à 18 atomes de carbone par radical,
g est 0 ou 1,
n représente 0 ou un nombre entier de 1 à 1500, et
m représente 0 ou un nombre entier de 1 à 100, avec la condition qu'au moins un radical A est présent par molécule,
A est un radical de formule 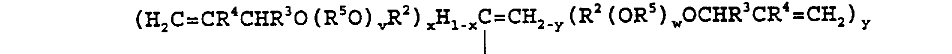
où
R peut être identique ou différent et est un radical alcoylène avec 1 à 4 atomes de carbone,
R³ peut être identique ou différent et représente un atome d'hydrogène ou un radical méthyle,
R⁴ peut être identique ou différent et représente un atome d'hydrogène ou un radical méthyle ou éthyle,
R⁵ peut être identique ou différent et représente un radical alcoylène avec 1 à 4 atomes de carbone,
v représente 0 ou un nombre entier et w représente 0 ou un nombre entier, avec la condition que dans le radical A, il est prévu au moins un espaceur -(R⁵O)-, et x représente 0 ou 1 et y, 0 ou 1, avec la condition que la somme x+y soit 1 ou 2.

5. Composés organosiliciés contenant des groupes alcényle suivant l'une ou plusieurs des revendications 1 à 4, caractérisés en ce que la somme de x et de y est égale à 1.

6. Procédé de préparation de composés organosiliciés contenant des groupes alcényle suivant l'une ou plusieurs des revendications 1 à 5, caractérisé en ce que
dans une première étape,
on additionne un composé organique (1) de formule
(H₂C=CR⁴CHR³O(R⁵O)ᵥR)ₓH₁₋ₓC≡CH_{1-y}(R(OR⁵)_{w}OCHR³CR⁴=CH₂)_{y}
où
R peut être identique ou différent et est un radical alcoylène avec 1 à 4 atomes de carbone,
R³ peut être identique ou différent et représente un atome d'hydrogène ou un radical méthyle,
R⁴ peut être identique ou différent et représente un atome d'hydrogène ou un radical méthyle ou éthyle,
R⁵ peut être identique ou différent et représente un radical alcoylène avec 1 à 4 atomes de carbone,
v représente 0 ou un nombre entier et w représente 0 ou un nombre entier, avec la condition que dans le radical A, il est prévu au moins un espaceur -(R⁵O)-, et x représente 0 ou 1 et y, 0 ou 1, avec la condition que la somme x+y soit égale à 1 ou à 2,
sur un composé organosilicié (2) avec au moins un atome d'hydrogène à liaison Si dans sa molécule,
en présence d'un catalyseur (3) activant l'addition d'hydrogène à liaison Si sur une liaison multiple aliphatique et, facultativement,
dans une deuxième étape,
le composé organosilicié contenant des groupes alcényle, présent après achèvement de la première étape, est équilibré avec un organopolysiloxane (4), choisi parmi le groupe consistant en les organopolysiloxanes linéaires, présentant des groupes triorganosiloxy terminaux, les organopolysiloxanes linéaires, présentant des groupes hydroxyle terminaux, les organopolysiloxanes cycliques et les copolymères d'unités diorganosiloxane et monoorgano-siloxane.

7. Procédé suivant la revendication 6, caractérisé en ce que l'on utilise comme composé organosilicé (2) avec au moins un atome d'hydrogène à liaison Si dans sa molécule, le silane (2a) de formule
HR_{d}Si(OR¹)_{3-d} (V)
où
R est identique ou différent et représente un radical hydrocarbure monovalent, facultativement halogéné, avec 1 à 18 atomes de carbone par radical,
R¹ est identique ou différent et représente un radical alcoyle avec 1 à 8 atomes de carbone par radical, qui peut être substitué par un ou plusieurs atomes d'oxygène de type éther, et
d représente 0, 1 ou 2.

8. Procédé suivant la revendication 6, caractérisé en ce que l'on utilise comme composé organosilicé (2) avec au moins un atome d'hydrogène à liaison Si dans sa molécule, l'organopolysiloxane (2b) de formule
H_{g}R_{3-g}SiO(SiR₂O)ₙ(SiRHO)ₘSiR_{3-g}H_{g} (VI)
où
R est identique ou différent et représente un radical hydrocarbure monovalent, facultativement halogéné, avec 1 à 18 atomes de carbone par radical,
R¹ est identique ou différent et représente un radical alcoyle avec 1 à 8 atomes de carbone par radical, qui peut être substitué par un ou plusieurs atomes d'oxygène de type éther,
g est 0 ou 1,
n représente 0 ou un nombre entier de 1 à 1500, et
m représente 0 ou un nombre entier de 1 à 100.

9. Composition contenant :
(A) un composé organosilicié contenant des groupes alcényle suivant l'une ou plusieurs des revendications 1 à 5 et respectivement, pouvant être préparé suivant l'une ou plusieurs des revendications 6 à 8,
(B) un organopolysiloxane contenant au moins un atome d'hydrogène à liaison Si, et
(C) un catalyseur activant l'addition d'hydrogène à liaison Si sur une liaison multiple aliphatique.

10. Utilisation de la composition suivant la revendication 9, pour préparer des enduits repoussant les matières collantes.
